# EUROPÄISCHE PATENTSCHRIFT

(11) **EP 1 175 571 B1**
(45) Veröffentlichungstag und Bekanntmachung des Hinweises auf die Patenterteilung: **29.10.2003**
(21) Anmeldenummer: 00930981.6
(22) Anmeldetag: 24.03.2000
(51) Int. Cl.: F16G 13/16

(54) **ENERGIEFÜHRUNGSKETTE**
CABLE CARRIER CHAIN
CHAINE DE TRANSPORT D'ENERGIE

(30) Priorität: 19.04.1999 DE 19919076
(43) Veröffentlichungstag der Anmeldung: 30.01.2002
(73) Patentinhaber: IGUS SPRITZGUSSTEILE FÜR DIE INDUSTRIE GmbH, D-51147 Köln (DE)
(72) Erfinder: BLASE, Günter, D-51429 Bergisch Gladbach (DE)
(74) Vertreter: Lippert, Stachow, Schmidt & Partner
(86) Internationale Anmeldenummer: DE0000908
(87) Internationale Veröffentlichungsnummer: WO00063586

(56) Entgegenhaltungen:
- EP-A- 0 844 415
- DE-A- 4 313 075
- DE-C- 3 714 056

## Beschreibung

Die Erfindung betrifft eine Energieführungskette zur Führung von Kabeln, Schläuchen und dergleichen von einer Anschlußstelle zu einer anderen Anschlußstelle, wobei mindestens eine der beiden Anschlußstellen ortsveränderlich ist, bestehend aus einer Vielzahl gelenkig miteinander verbundener bzw. verbindbarer Kettenglieder aus Kunststoff, die jeweils aus zwei Seitenlaschen und zwei Querstegen gebildet sind, wobei wenigstens einer der Querstege lösbar mit den Seitenlaschen verbunden bzw. verbindbar ist, der Quersteg beidseitig angeordnete, parallel zueinander verlaufende, sich in Längsrichtung des Querstegs erstreckende Ansätze aufweist, die Ansätze mit quer zu diesen liegenden zylindrischen Lagerzapfen versehen sind, die Seitenlaschen zwei parallele Schlitze aufweisen, in die die Ansätze des Querstegs eingreifen, in den Seitenlaschen nutenförmige Lagerstellen mit Hinterschneidungen vorgesehen sind, in die die Lagerzapfen einrastbar sind, und die Seitenlaschen eine Schnappeinrichtung aufweisen, die mit einer an jedem Ende des Querstegs vorgesehenen Rastleiste zusammenwirkt.

Bekannte Energieführungsketten der genannten Art (DE 43 13 075 C2) haben sich bestens bewährt. Bei diesen bekannten Energieführungsketten muß der Verschluß zwischen den Seitenlaschen und den Querstegen mittels eines Werkzeugs erfolgen, welches einem Schraubendreher ähnlich ist.

Der Erfindung liegt die Aufgabe zugrunde, die Energieführungskette derart zu modifizieren, daß sich die Querstege bequem auch von Hand öffnen lassen.

Erfindungsgemäß wird diese Aufgabe dadurch gelöst, daß die Schnappeinrichtung als elastischer Schnapphaken ausgebildet ist, der im befestigten Zustand des jeweiligen Querstegs mittig zwischen den Ansätzen liegt, durch den Zwischenraum zwischen den beiden Ansätzen hindurchgreift und von außen von Hand zugänglich ist.

Bei der erfindungsgemäßen Konstruktion läßt sich die Energieführungskette sehr leicht von Hand öffnen, indem die Bedienungsperson den hochzuschwenkenden Quersteg mit der Hand umgreift und mit dem Daumen den Schnapphaken entriegelt, so daß der Quersteg auf der jeweils gewünschten Seite nach oben geschwenkt werden kann.

Um die Bedienung noch zu erleichtern, kann der Schnapphaken im befestigten Zustand des Querstegs über die Außenfläche des Querstegs hinaus vorstehen, so daß man den Schnapphaken mit dem Daumen leicht betätigen kann.

Vorzugsweise ist der Schnapphaken am Ende einer elastischen Zunge angeordnet. Aufgrund dieser Konstruktion besteht die Möglichkeit, den Schnapphaken sehr leicht betätigbar zu gestalten, so daß die Bedienungsperson keine größere Kraft benötigt, um die Verbindung zu öffnen.

Der Schnapphaken ist zweckmäßig so breit ausgebildet, wie der lichte Abstand zwischen den beiden Ansätzen, die an dem Quersteg vorgesehen sind. Dadurch kann der Schnapphaken relativ breit gestaltet werden, so daß trotz der leichten Schwenkbarkeit des Schnapphakens eine gute Stabilität erzielt wird.

Die Rastleiste ist zweckmäßig mit einer zur Außenfläche des Querstegs weisenden Rastfläche versehen, die der Schnapphaken im eingerasteten Zustand übergreift. Zum Lösen braucht der Schnapphaken dann lediglich von der Rastfläche hinuntergeschoben zu werden, wozu ein nur kurzer Verschiebungsweg erforderlich ist.

Die Rastfläche kann ferner eine seitliche, dem Schnapphaken zugewandte schräge Auflaufläche aufweisen, die beim Niederdrücken des Querstegs den Schnapphaken auslenkt, bis er über die Rastfläche der Rastleiste einschnappt. Durch diese Konstruktion ist ebenso wie auch bei anderen bekannten Konstruktionen ein leichtes Einrasten des Schnapphakens durch Niederdrücken des jeweiligen Querstegs möglich.

Das Material des Querstegs kann auf der der Rastleiste unmittelbar gegenüberliegenden Seite eine Hinterschneidung aufweisen. Dadurch ist es möglich, den Schnapphaken bei Bedarf auch mit Hilfe eines schraubendreherähnlichen Werkzeugs auszuienken und die Verbindung zu lösen. Von dieser Möglichkeit der Verwendung eines Werkzeugs wird man dann Gebrauch machen, wenn sehr viele Stege zu lösen sind und/oder wenn die Bedienungsperson evtl. eine verletzte Hand hat.

Vorzugsweise ist in der Außenfläche des Querstegs eine sich von der Rastleiste in Richtung zur Kettengliedmitte hin erstreckende Griffmulde ausgebildet, in die zum Öffnen des Querstegs der Daumen eingelegt und dann gegen den Schnapphaken gedrückt wird. Aufgrund dieser Konstruktion ist es möglich, den Schnapphaken relativ kurz auszubilden, ohne daß dadurch die Bedienfreundlichkeit reduziert wird.

Die Griffmulde kann breiter ausgebildet sein als der lichte Abstand zwischen den beiden Absätzen, so daß ausreichend Platz für das Ansetzen des Betätigungsdaumens vorhanden ist.

Die Lagerzapfen sind zweckmäßig an den Außenseiten der Ansätze angeordnet. Aufgrund dieser Konstruktion können die mit den Lagerzapfen versehenen Ansätze breiter ausgebildet werden, so daß die gesamte Konstruktion stabiler wird.

Die Erfindung ist in der Zeichnung beispielsweise veranschaulicht und im nachstehenden im einzelnen anhand der Zeichnung beschrieben. Es zeigen:
- Fig. 1: die Ansicht einer Seitenlasche eines Kettengliedes von der Innenseite her,
- Fig. 2: einen Schnitt entlang der Linie II-II der Seitenlasche gemäß Fig. 1, wobei das Ende eines Querstegs eingesetzt werden soll,
- Fig. 3: den gleichen Schnitt wie in Fig. 2 mit eingerastetem Quersteg,
- Fig. 4: einen Schnitt entlang der Linie IV-IV aus Fig. 1, wobei der Quersteg von oben eingesetzt werden soll,
- Fig. 5: die Draufsicht auf einen Quersteg,
- Fig. 6: die Draufsicht auf ein Kettenglied ohne den oberen Quersteg gemäß Fig. 5,
- Fig. 7 bis 10: im Detail den Mechanismus des Einrastens eines Querstegs,
- Fig. 11 und 12: den Mechanismus des Lösens eines Querstegs,
- Fig. 13: ein anderes Ausführungsbeispiel der Erfindung, bei dem die Schnappeinrichtung zum Lösen des Querstegs mit dem Daumen bzw. einem anderen geeigneten Finger betätigt wird und
- Fig. 14: die gleiche Ausführungsform gemäß Fig. 14, wobei allerdings die Schnappeinrichtung mittels eines Werkzeugs gelöst wird.

Energieführungsketten werden aus einer Vielzahl von Kettengliedern 1 zusammengesetzt, die gelenkig miteinander verbunden werden.

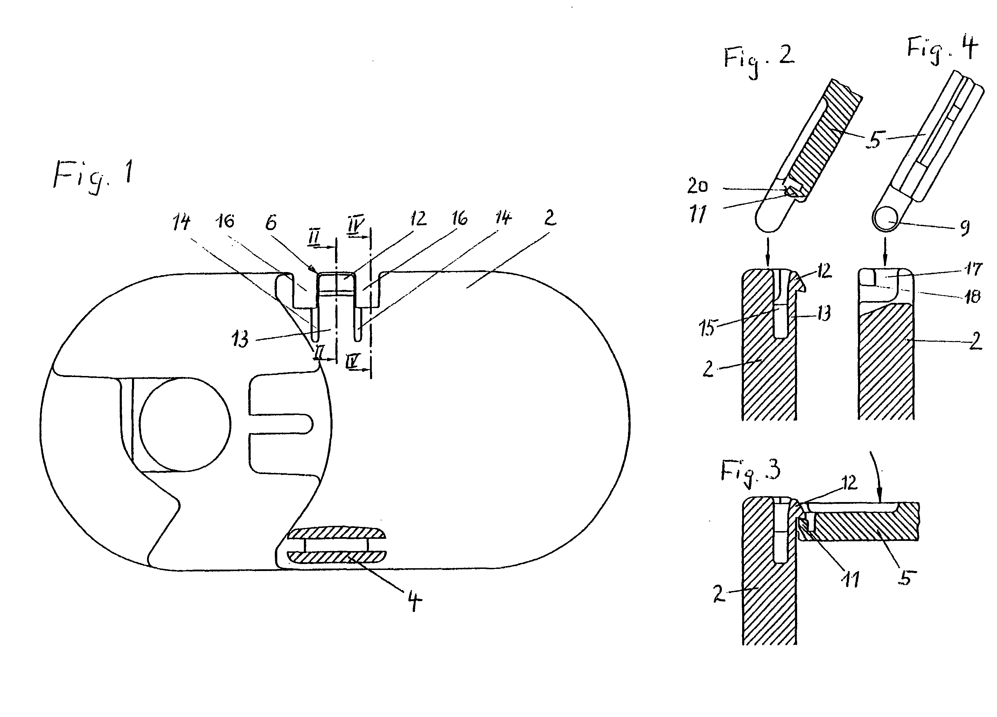

Nach Fig. 1, 5 und 6 besteht ein einzelnes Kettenglied 1 aus zwei Seitenlaschen 2 und 3, die über zwei Querstege 4 und 5 miteinander verbunden sind. Der in Fig. 1 im Schnitt dargestellte untere Quersteg 4 ist gemeinsam mit den beiden Seitenlaschen 2 und 3 als einstückiges Spritzgußteil aus einem Kunststoff, der einen gewissen Grad an Elastizität aufweist, hergestellt. Der obere Quersteg 5 ist als gesondertes Teil ausgebildet und kann mittels einer Schnappeinrichtung 6 an den beiden Seitenlaschen 2 und 3 befestigt werden. Hierbei ist es auch denkbar, daß der untere Quersteg 4 mittels einer entsprechend ausgebildeten Schnappeinrichtung mit den beiden Seitenlaschen 2 und 3 verbunden wird.

Der als gesondertes Teil ausgebildete obere Quersteg 5, der mittels der Schnappeinrichtung 6 mit den beiden Seitenlaschen 2 und 3 verbunden werden soll, um die Energieführungskette öffnen und schließen zu können, besteht aus einem langgestreckten Teil, welches an beiden Enden mit Ansätzen 7 und 8 versehen ist, die parallel zueinander verlaufen und sich in Längsrichtung des Querstegs 5 erstrecken. Die Ansätze 7 und 8 sind mit quer zu diesen liegenden zylindrischen Lagerzapfen 9 versehen, die an den Außenseiten der Ansätze 7 und 8 angeordnet sind.

Am Grunde des Zwischenraums 10 zwischen den beiden Ansätzen 7 und 8 ist eine Rastleiste 11 angeordnet, die mit der Schnappeinrichtung 6 zusammenwirkt.

Wie insbesondere aus Fig. 1, 2 und 3 zu ersehen ist, besteht die Schnappeinrichtung 6 aus einem elastischen Schnapphaken 12, der mit seiner Breite genau in den Zwischenraum 10 zwischen den beiden Ansätzen 7 und 8 paßt und mit der Rastleiste 11 zusammenwirkt. Die Elastizität des Schnapphakens 12 wird dadurch erzielt, daß am Ende einer elastischen Zunge 13 angeordnet ist. Die elastische Zunge 13 ist über seitliche Schlitze 14 und einen hinteren Freiraum 15 von dem übrigen Material getrennt, so daß der Schnapphaken 12 in dem in Fig. 2 dargestellten Schnitt nach rechts und links bewegt werden kann.

In den Bereichen auf beiden Seiten neben dem Schnapphaken 12 befinden sich zwei Ausnehmungen 16, die im montierten Zustand zur Aufnahme der Ansätze 7 und 8 des Querstegs 5 dienen. Die Lagerzapfen 9 greifen dabei in seitliche Führungsnuten 17 ein, in denen sie im Endzustand hinter einer Hinterschneidung 18 einrasten.

An seiner Oberseite ist der Quersteg 5 im unmittelbaren Anschluß an die Rastleiste 11 an jedem Ende mit einer Griffmulde 19 versehen, die etwas breiter ausgebildet ist als der lichte Abstand 10 zwischen den beiden Ansätzen 7 und 8.

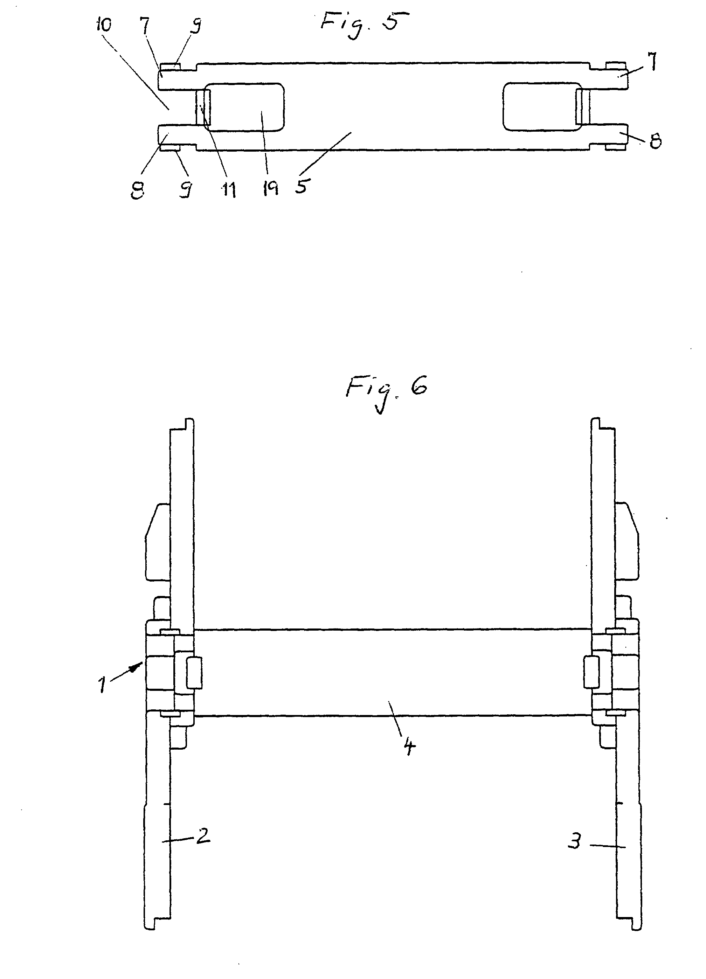

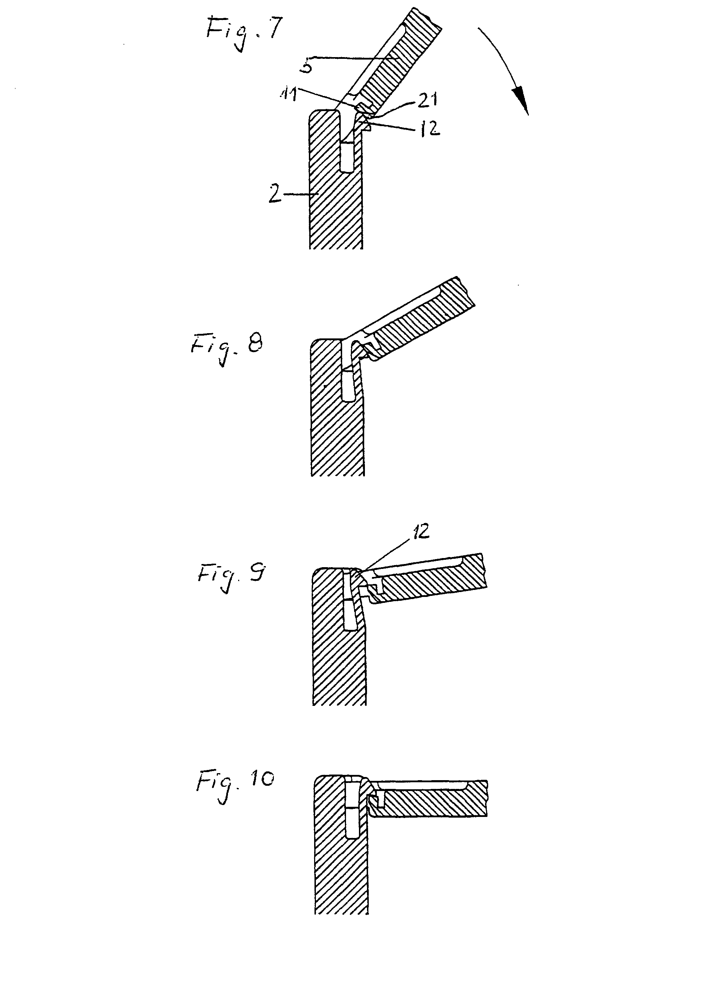

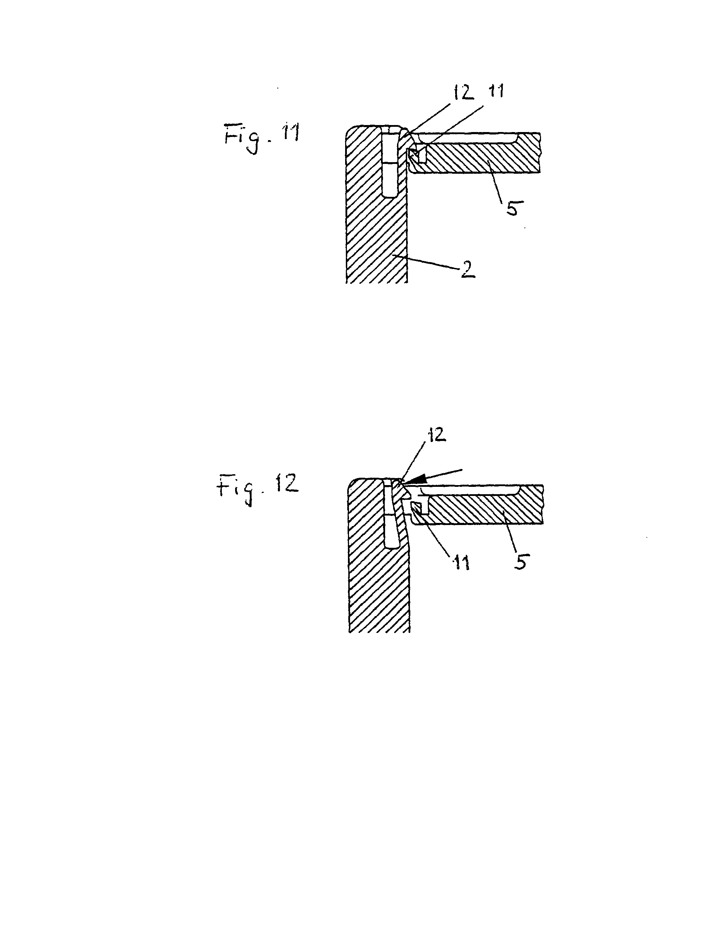

Wie aus den Figuren 2 bis 4 zu entnehmen ist, wird der obere Quersteg 5 zunächst auf einer Seite steil von oben in seinen Aufnahmebereich eingesetzt, wobei die Ansätze 7 und 8 in die Ausnehmungen 16 eingreifen und die beiden Lagerzapfen 9 in die Führungsnuten 17 eingeschoben werden, bis sie hinter den Hinterschneidungen 18 einrasten. Dann wird der Quersteg 5, wie in Fig. 3 dargestellt, in die horizontale Schließlage geschwenkt, in der der Schnapphaken 12 eine zur Außenfläche des Querstegs weisende Rastfläche 20 der Rastleiste 11 übergreift. Der Einrastvorgang ist im Detail in den Fig. 7 bis 10 dargestellt. Nachdem der Quersteg 5 zunächst im geöffneten Zustand mit seinen Lagerzapfen 9 in die Führungsnuten 17 eingesetzt worden ist, wird er gemäß Fig. 7 in Richtung des Pfeiles nach unten geschwenkt. Dabei gleitet eine an der Rastleiste 11 vorgesehene Auflaufschräge 21 an dem Haken 12 entlang, wie insbesondere aus Fig. 8 zu entnehmen ist, bis die in Fig. 9 dargestellte Position erreicht ist. Nach dieser Position schnappt der Schnapphaken 12 über die Rastleiste 11 und liegt dann an der Rastfläche 20 der Rastleiste 11 an und ist in dieser Position gesichert.

Auf der in der Zeichnung nicht dargestellten gegenüberliegenden Seite schnappt der Quersteg 5 nach dem gleichen Schema in die gesperrte Position ein, wobei hier jedoch die Lagerzapfen 9 und der Schnapphaken 12 in nahezu horizontaler Position des Querstegs 5 gleichzeitig einrasten.

Wenn man den Quersteg 5 öffnen will, so muß der Schnapphaken 12 aus der in Fig. 11 dargestellten Lage durch Druck in Richtung des Pfeiles in die in Fig. 12 dargestellte Lage verschwenkt werden. In dieser Position ist die Rastleiste 11 nicht mehr durch den Schnapphaken 12 gesperrt, so daß der Quersteg 5 an dieser Stelle nach oben angehoben werden kann, wobei sich die Lagerzapfen 9 aus den Führungsnuten 17 lösen. Der Druck in Richtung des in Fig. 12 dargestellten Pfeils kann beispielsweise mittels des Daumens der Bedienungsperson erfolgen, während diese mit den übrigen Fingern den Quersteg 5 umgreift.

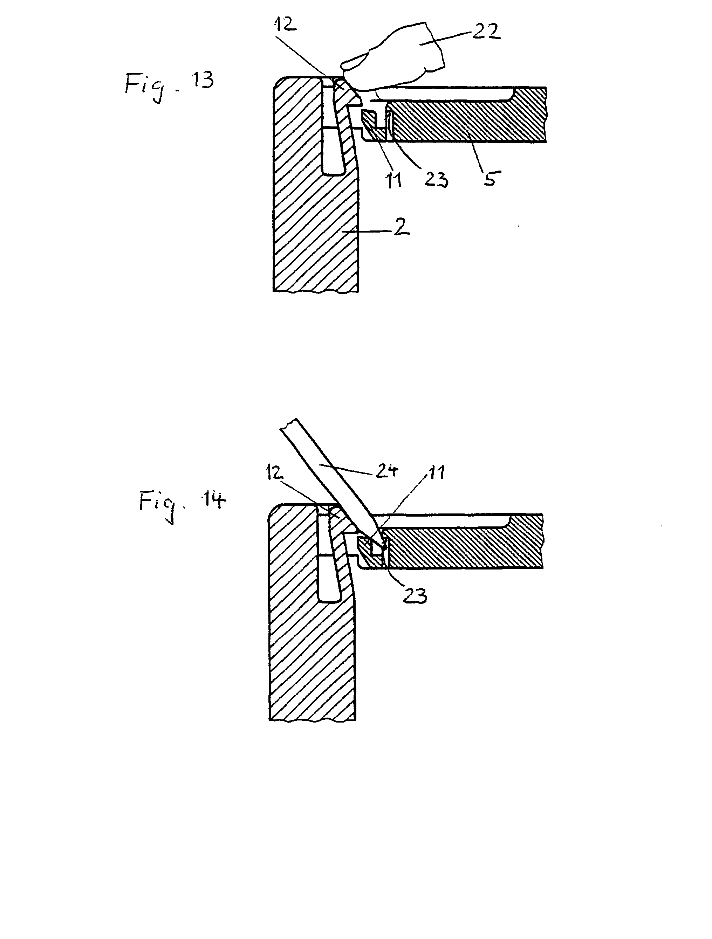

Das Aufbringen des Drucks auf den Schnapphaken 12 mittels eines Fingers 22 ist in Fig. 13 dargestellt, in welcher eine abgewandelte Ausführungsform der Erfindung dargestellt ist. In dieser Ausführungsform ist in dem Material des Querstegs 5 auf der der Rastleiste 11 unmittelbar gegenüberliegenden Seite eine Hinterschneidung 23 vorgesehen. Bei dieser Ausführungsform kann auch gemäß Fig. 14 der Druck auf den Haken 12 mittels eines Werkzeugs 24 aufgebracht werden, welches beispielsweise eine einem Schraubendreher ähnliche Gestalt aufweist. Dabei wird die Schraubendreherspitze hinter die Hinterschneidung 23 geklemmt und das Werkzeug 24 in Fig. 14 nach links geschwenkt, wodurch der Schnapphaken 12 in eine Freigabeposition gedrückt wird, in der die Rastleiste 11 frei ist und der Quersteg 5 auf dieser Seite nach oben bewegt werden kann.

### Bezugszeichenliste

- 1: Kettenglied
- 2: Seitenlasche
- 3: Seitenlasche
- 4: Quersteg
- 5: Quersteg
- 6: Schnappeinrichtung
- 7: Ansätze
- 8: Ansätze
- 9: Lagerzapfen
- 10: Abstand
- 11: Rastleiste
- 12: Schnapphaken
- 13: Zunge
- 14: Schlitze
- 15: Freiraum
- 16: Ausnehmungen
- 17: Führungsnuten
- 18: Hinterschneidung
- 19: Griffmulde
- 20: Rastfläche
- 21: Auflaufschräge
- 22: Finger
- 23: Hinterschneidung

- 24: Werkzeug

## Patentansprüche

1. Energieführungskette zur Führung von Kabeln, Schläuchen und dergleichen von einer Anschlußstelle zu einer anderen Anschlußstelle, wobei mindestens eine der beiden Anschlußstellen ortsveränderlich ist, bestehend aus einer Vielzahl gelenkig miteinander verbundener bzw. verbindbarer Kettenglieder aus Kunststoff, die jeweils aus zwei Seitenlaschen und zwei Querstegen gebildet sind, wobei wenigstens einer der Querstege lösbar mit den Seitenlaschen verbunden bzw. verbindbar ist, der Quersteg beidseitig angeordnete, parallel zueinander verlaufende, sich in Längsrichtung des Querstegs erstreckende Ansätze aufweist, die Ansätze mit quer zu diesen liegenden zylindrischen Lagerzapfen versehen sind, die Seitenlaschen zwei parallele Schlitze aufweisen, in die die Ansätze des Querstegs eingreifen, in den Seitenlaschen nutenförmige Lagerstellen mit Hinterschneidungen vorgesehen sind, in die die Lagerzapfen einrastbar sind, und die Seitenlaschen eine Schnappeinrichtung aufweisen, die mit einer an jedem Ende des Querstegs vorgesehenen Rastleiste zusammenwirkt, **dadurch gekennzeichnet, daß** die Schnappeinrichtung (6) als elastischer Schnapphaken (12) ausgebildet ist, der im befestigten Zustand des jeweiligen Querstegs (5) mittig zwischen den Ansätzen (7, 8) durch den Zwischenraum (10) zwischen den beiden Ansätzen (7, 8) hindurchgreift und von außen von Hand zugänglich ist.

2. Energieführungskette nach Anspruch 1, **dadurch gekennzeichnet, daß** der Schnapphaken (12) im befestigten Zustand des Querstegs (5) über die Außenfläche des Querstegs (5) hinaus vorsteht.

3. Energieführungskette nach Anspruch 1 oder 2, **dadurch gekennzeichnet, daß** der Schnapphaken (12) am Ende einer elastischen Zunge (13) angeordnet ist.

4. Energieführungskette nach einem der Ansprüche 1 bis 3, **dadurch gekennzeichnet, daß** der Schnapphaken (12) so breit ist wie der lichte Abstand (10) zwischen den beiden Ansätzen (7, 8).

5. Energieführungskette nach einem der Ansprüche 1 bis 4, **dadurch gekennzeichnet, daß** die Rastleiste (11) mit einer zur Außenfläche des Querstegs (5) weisenden Rastfläche (20) versehen ist, die der Schnapphaken (12) im eingerasteten Zustand übergreift.

6. Energieführungskette nach einem der Ansprüche 1 bis 5, **dadurch gekennzeichnet, daß** die Rastleiste (11) eine seitliche, den Schnapphaken (12) zugewandte schräge Auflauffläche (21) aufweist, die beim Niederdrücken des Querstegs (5) den Schnapphaken (12) auslenkt, bis er über die Rastfläche (20) der Rastleiste (11) einschnappt.

7. Energieführungskette nach einem der Ansprüche 1 bis 6, **dadurch gekennzeichnet, daß** das Material des Querstegs (5) auf der der Rastleiste (11) unmittelbar gegenüberliegenden Seite eine Hinterschneidung (23) aufweist.

8. Energieführungskette nach einem der Ansprüche 1 bis 7, **dadurch gekennzeichnet, daß** in der Außenfläche des Querstegs (5) eine sich von der Rastleiste (11) in Richtung zur Kettengliedmitte hin erstreckende Griffmulde (19) ausgebildet ist.

9. Energieführungskette nach Anspruch 8, **dadurch gekennzeichnet, daß** die Griffmulde (19) breiter ist als der lichte Abstand (10) zwischen den beiden Ansätzen (7, 8).

10. Energieführungskette nach einem der Ansprüche 1 bis 9, **dadurch gekennzeichnet, daß** die Lagerzapfen (9) an den Außenseiten der Ansätze (7, 8) angeordnet sind.

## Claims

1. Energy guiding chain for guiding cables, hoses and the like from one connection point to another, where at least one of the two connection points is movable, consisting of numerous plastic chain links that are, or can be connected to one another in articulated fashion, each of which comprises two side straps and two cross-members, where at least one of the cross-members is, or can be connected to the side straps in detachable fashion, the cross-member having projections arranged parallel to one another on both sides and extending in the longitudinal direction of the cross-member, these projections being provided with transverse, cylindrical bearing pins, the side straps having two parallel slits, which are engaged by the projections of the cross-member, the side straps having groove-shaped bearing areas with undercuts, into which the bearing pins can be snapped, and the side straps having a snap mechanism, which interacts with a snap ridge provided on each end of the cross-member, **characterised in that** the snap mechanism (6) is designed as an elastic hook (12), which is located in the centre between the projections (7, 8) when the respective cross-member (5) is mounted, reaches through the space (10) between the two projections (7, 8) and is accessible by hand from the outside.

2. Energy guiding chain as per Claim 1, **characterised in that** the hook (12) protrudes beyond the outside surface of the cross-member (5) when the cross-member (5) is mounted.

3. Energy guiding chain as per Claim 1 or 2, **charac terised in that** the hook (12) is located on the end of an elastic tab (13).

4. Energy guiding chain as per one of Claims 1 to 3, **characterised in that** the hook (12) is as wide as the inside space (10) between the two projections (7, 8).

5. Energy guiding chain as per one of Claims 1 to 4,
**characterised in that** the snap ridge (11) is provided with a snap surface (20), which faces the outside surface of the cross-member (5) and is engaged from above by the hook when it is snapped in place.

6. Energy guiding chain as per one of Claims 1 to 5, **characterised in that** the snap ridge (11) has a lateral, bevelled surface (21) facing the hook (12), which deflects the hook (12) when the cross-member (5) is pushed down, until it snaps over the snap surface (20) of the snap ridge (11).

7. Energy guiding chain as per one of Claims 1 to 6, **characterised in that** the material of the cross-member (5) can have an undercut (23) on the side directly opposite the snap ridge (11).

8. Energy guiding chain as per one of Claims 1 to 7, **characterised in that** the outside surface of the cross-member (5) has a grip (19) extending from the snap ridge (11) towards the centre of the chain link.

9. Energy guiding chain as per Claim 8, **characterised in that** the grip (19) is wider than the inside space (10) between the two projections (7, 8).

10. Energy guiding chain as per one of Claims 1 to 9,
**characterised in that** the bearing pins (9) are located on the outer sides of the projections (7, 8).

## Revendications

1. Chaîne de transport d'énergie pour le guidage de câbles, de tuyaux et similaires d'un point de couplage à un autre, au moins un des deux points de couplage étant mobile, dotée d'un grand nombre de maillons en plastique reliés et/ou pouvant être reliés de manière flexible les uns aux autres et formés chacun à partir de deux barres latérales de liaison et de deux barrettes transversales, au moins l'une des barrettes transversales étant reliée ou pouvant l'être de façon amovible aux barres latérales de liaison, la barrette transversale comportant des saillies, parallèles les unes aux autres, disposées des deux côtés et se prolongeant dans la direction longitudinale de la barrette transversale, les saillies étant pourvues de tourillons cylindriques en biais par rapport à elles, les barres latérales de liaison comportant deux rainures parallèles dans lesquelles s'engagent les saillies de la barrette transversale, des points d'appui en forme de gorge étant prévus dans les barres latérales de liaison avec des séparations arrières dans lesquelles les tourillons peuvent s'enclencher et les barres de liaison transversales comportant un dispositif encliquetable qui agit avec une barre d'arrêt prévue sur chaque extrémité de la barrette transversale, **caractérisée en ce que** le dispositif encliquetable (6) est conçu comme un crochet élastique encliquetable (12) qui, lorsque la barrette transversale (5) correspondante est fixée au milieu entre les saillies (7, 8), s'engage dans l'intervalle (10) entre les deux saillies (7, 8) et auquel on peut accéder de l'extérieur avec la main.

2. Chaîne de transport d'énergie selon la revendication 1, **caractérisée en ce que** le crochet encliquetable (12) dépasse de la surface extérieure de la barrette transversale (5) lorsque la barre transversale (5) est à l'état fixé.

3. Chaîne de transport d'énergie selon la revendication 1 ou 2, **caractérisée en ce que** le crochet encliquetable (12) est disposé sur l'extrémité d'une languette élastique (13).

4. Chaîne de transport d'énergie selon l'une quelconque des revendications 1 à 3, **caractérisée en ce que** le crochet encliquetable (12) est aussi large que l'écartement (10) entre les deux saillies (7, 8).

5. Chaîne de transport d'énergie selon l'une quelconque des revendications 1 à 4, **caractérisée en ce que** la barre d'arrêt (11) est dotée d'une surface d'arrêt (20) orientée vers la surface extérieure de la barrette transversale (5) et qu'elle entre dans le crochet encliquetable (12) à l'état enclenché.

6. Chaîne de transport d'énergie selon l'une quelconque des revendications 1 à 5, **caractérisée en ce que** la barre d'arrêt (11) comporte une surface de contact (21) latérale inclinée tournée vers le crochet encliquetable (12) qui fait sortir le crochet encliquetable (12) en cas d'enfoncement de la barrette transversale (5) jusqu'à ce qu'il enclenche la barre d'arrêt (11) via la surface d'arrêt (20).

7. Chaîne de transport d'énergie selon l'une quelconque des revendications 1 à 6, **caractérisée en ce que** le matériau de la barrette transversale (5) comporte une séparation arrière (23) sur le côté directement opposé à la barre d'arrêt (11).

8. Chaîne de transport d'énergie selon l'une quelconque des revendications 1 à 7, **caractérisée en ce qu'**une poignée encastrée (19) partant de la barre d'arrêt (11) en direction du centre du maillon se trouve dans la surface extérieure de la barrette transversale (5).

9. Chaîne de transport d'énergie selon la revendication 8 **caractérisée en ce que** la poignée encastrée (19) est plus large que l'écartement (10) entre les deux saillies (7, 8).

10. Chaîne de transport d'énergie selon l'une quelconque des revendications 1 à 9, **caractérisée en ce que** les tourillons (9) sont disposés sur les faces extérieures des saillies (7, 8).
